# EUROPÄISCHE PATENTSCHRIFT

(11) **EP 3 832 229 B1**
(45) Veröffentlichungstag und Bekanntmachung des Hinweises auf die Patenterteilung: **15.01.2025**
(21) Anmeldenummer: 20210421.2
(22) Anmeldetag: 27.11.2020
(51) Int. Cl.: F25B 41/35

(54) **EXPANSIONSVENTIL**
EXPANSION VALVE
SOUPAPE DE DÉTENTE

(30) Priorität: 04.12.2019 DE 102019132976; 24.09.2020 DE 102020124871
(43) Veröffentlichungstag der Anmeldung: 09.06.2021
(73) Patentinhaber: ECO Holding 1 GmbH, 97828 Marktheidenfeld (DE)
(72) Erfinder: Dehrmann, Sven, 76744 Wörth (DE); Eslava Orradre, Adrian, 70374 Stuttgart (DE); Reimann, Daniel, 73666 Baltmannsweiler (DE); Schneider, Toni, 73728 Esslingen (DE)
(74) Vertreter: Keller Schneider Patentanwaltsgesellschaft mbH

(56) Entgegenhaltungen:
- CN-A- 101 994 839
- CN-A- 102 252 120
- CN-U- 207 093 877
- JP-A- 2010 096 203
- JP-B2- 3 328 530

## Beschreibung

Die Erfindung betrifft ein Expansionsventil.

Expansionsventile, auch Drosselventile genannt, sind allgemein Vorrichtungen, die mittels einer lokalen Verengung eines Strömungsquerschnitts einen Druck eines durchfließenden Fluides vermindern und damit eine Volumenzunahme bzw. Expansion bewirken. Üblicherweise weisen Expansionsventile einen Mechanismus auf, der eine Rotationsbewegung in eine axiale Bewegung zum Öffnen und Schließen des Expansionsventils überführt. Für die axiale Bewegung zum Öffnen und Schließen des Expansionsventils ist eine Begrenzung bzw. eine Festlegung zweier Endpunkte mittels einer Stopperstruktur notwendig.

Derartige Expansionsventile sind im Stand der Technik hinlänglich bekannt (siehe z.B. CN 102 252 120 A). Beispielsweise ist aus der JP 3328530 B2 eine Stopperstruktur für ein motorisiertes Ventil bekannt. Bei dem Ventil wird ein Öffnungsgrad eines Ventilsitzes in einem Ventilhauptkörper durch Drehen eines Rotors eines Motors durch Elektrifizieren eines Stators des Motors gesteuert. Der Stator ist an einem Außenumfang eines Gehäuses befestigt. Durch einen Schraubeneffekt einer Innenschraube und einer Außenschraube wird die Drehung des Rotors in eine lineare Bewegung umgewandelt.

Die Stopperstruktur, die die beiden Endpunkte beim Öffnen und Schließen des Expansionsventils festlegen soll, weist einen Stopper, ein Eingriffsteil und einen ringförmigen Führungsstift auf.

Der Stopper ist vertikal an einer von dem Zentrum entfernten Stelle an einer Rückseite eines Deckels an einem oberen Endbereich des Gehäuses angeordnet.

Das Eingriffsteil weist einen langen schmalen Schaft auf, der sich auf einer gegenüberliegenden Seite eines Ventilschafts erstreckt, der integral mit dem Rotor ausgebildet ist. Dabei ist der Schaft in eine Führungsstrecke mit einem schraubenförmigen Mittelteil und vorstehende Bereiche an dem oberen und unteren Ende eingesetzt, wobei der obere vorstehende Bereich an einem oberen Endbereich des Schafts angebracht ist und wobei der untere vorstehende Bereich nach oben gebogen ist.

Die Stopperstruktur weist ferner einen ringförmigen Führungsstift auf, der einen Ringbereich, der ungefähr einmal um das schraubenförmige Mittelteil herum gedreht wird, und einen Arm aufweist, der sich in Außenumfangsrichtung unterhalb des Ringbereichs so erstreckt, dass ein Kontakt mit dem Stopper bewirkt werden kann, der in einer schraubenförmigen Nut der Führungsstrecke angeordnet ist.

Dabei berührt ein oberer Endbereich des Ringbereichs des Führungsstifts den vorstehenden Bereich der Führungsstrecke, wenn sich der ringförmige Führungsstift entlang der schraubenförmigen Nut der Führungsstrecke bewegt. Ferner berührt der Arm des Führungsstifts das Eingriffsteil, das an dem unteren vorstehenden Bereich ausgebildet ist, wenn sich der Führungsstift entlang der schraubenförmigen Nut der Führungsstrecke nach unten bewegt.

Insgesamt ist der oben beschriebene Aufbau des aus dem Stand der Technik bekannten Expansionsventils äußerst komplex. Diese Komplexität ist allerdings kein Einzelproblem. Vielmehr weisen sämtliche aus dem Stand der Technik bekannten Expansionsventile den Nachteil auf, dass diese zur Erfüllung ihrer Funktion einen komplizierten und aufwendigen Aufbau aufweisen. Dieser komplizierte Aufbau führt unweigerlich auch dazu, dass ein einfaches Austauschen des Expansionsventils oder von Teilen hiervon nicht möglich ist.

Ferner besteht bei den bekannten Expansionsventilen auch ein Problem dahingehend, dass diese einem hohen Verschleiß ausgesetzt sind. Das führt dazu, dass die aus dem Stand der Technik bekannten Expansionsventile relativ häufig und oftmals vollständig ausgetauscht werden müssen.

Neben einem einfacheren Aufbau, der ein einfacheres Austauschen von sowohl dem gesamten Expansionsventil als auch Teilen hiervon ermöglicht, wäre daher insgesamt auch ein verschleißärmeres Expansionsventil wünschenswert.

Ein weiterer Nachteil bekannter Expansionsventile liegt darin, dass diese in ihrer Herstellung aufwändig sind.

Der Erfindung liegt daher die Aufgabe zugrunde, ein Expansionsventil anzugeben, das die oben genannten Probleme und Nachteile des Standes der Technik ausräumt. Insbesondere ist es Aufgabe der vorliegenden Erfindung, ein Expansionsventil anzugeben, das einerseits verschleißarm und andererseits kompakt ausgebildet ist. Ferner ist es Aufgabe der vorliegenden Erfindung, ein Expansionsventil anzugeben, bei dem ein besonders einfacher Austausch möglich ist. Eine weitere Aufgabe der vorliegenden Erfindung ist es, ein Ventil anzugeben, das einen Druckausgleich zwischen verschiedenen Räumen innerhalb des Ventils trotz eines verschleißarmen, kompakten Aufbaus und einer einfachen Austauschbarkeit ermöglicht.

Ferner liegt der Erfindung die Aufgabe zugrunde, ein Verfahren zum Herstellen eines Expansionsventils zu ermöglichen, das weniger aufwändig als die aus dem Stand der Technik bekannten Verfahren ist.

Die erfindungsgemäße Lösung besteht darin, ein mit einem Schrittmotor betreibbares Expansionsventil anzugeben, das Folgendes aufweist: Ein Gehäuse; einen Hohlschaft, welcher in dem Gehäuse angeordnet ist; einen den Hohlschaft tragenden Ventilbasiskörper, welcher das Gehäuse abschließt; einen Rotor, welcher mittels eines Stators antreibbar ist; eine zentrale Spindel, welche innerhalb des Hohlschafts angeordnet und von dem Rotor derart antreibbar ist, dass eine Rotationsbewegung der Spindel über eine Gewindeverbindung in eine axiale Bewegung zum Öffnen und Schließen des Expansionsventils überführbar ist; und einen einen Gewindegang aufweisenden Spiralkörper, welcher auf einer Mantelfläche des Hohlschafts angeordnet und mittels des Rotors antreibbar ist, wobei an dem Hohlschaft ein Anschlagkörper angeordnet ist, der in dem Gewindegang des Spiralkörpers bewegbar angeordnet ist und als Teil einer Spindel-Stopper-Struktur eine obere Endlage und eine untere Endlage der zentralen Spindel vorgibt.

Die zentrale Spindel ist insbesondere als Gewindespindel ausgebildet, die zusammen mit anderen Elementen (hier einem Innengewinde des Hohlschafts) dazu dient, eine Rotationsbewegung des Rotors in eine translatorische Bewegung umzuwandeln.

Hierzu ist die zentrale Spindel mit dem Rotor verbunden. Der Spiralkörper ist ein separates Element und nicht Teil des Hohlschafts. Der Spiralkörper ist ebenfalls so mit dem Rotor verbunden, dass der Rotor diesen antreiben kann.

Der Anschlagkörper ist insbesondere auf der Mantelfläche des Hohlschafts angeordnet und stößt vorzugsweise, wenn die zentrale Spindel in der unteren Endlage ist, an ein erstes (oberes) Anschlagelement, und wenn die zentrale Spindel in ihrer oberen Endlage ist, an ein zweites (unteres) Anschlagelement. Bei dem Anschlagkörper kann es sich beispielsweise um ein stabförmiges Element handeln. Ob die obere oder untere Endlage der Spindel festgelegt wird, ist von der Steigung des Spiralkörpers und der Steigung der Spindel abhängig.

Dadurch, dass der den Gewindegang aufweisende Spiralkörper (separat) mittels des Rotors antreibbar ist und der Anschlagkörper so angeordnet ist, dass er in diesem Gewindegang bewegbar ist, ist eine besonders kompakte Bauform des Expansionsventils möglich.

Gemäß einer vorteilhaften Weiterbildung der Erfindung weist der Hohlschaft an der Mantelfläche eine Längsnut auf, wobei der Anschlagkörper als Gleitring ausgebildet ist, der in dem Gewindegang des Spiralkörpers mittels der Längsnut verdrehgesichert und in Axialrichtung bewegbar angeordnet ist.

Je nach Drehrichtung wird der Gleitring axial entlang des Hohlschafts (innerhalb der Längsnut) auf oder ab bewegt.

Da sich der Gleitring innerhalb der Längsnut auf und ab bewegen kann, kann die Baugröße des Expansionsventils insgesamt verringert werden, so dass dieses noch kompakter ausgestaltet werden kann. Insbesondere wird mittels der Längsnut und des Gleitrings ein einfacher Aufbau bei großer Funktionssicherheit geboten.

Außerdem wird dadurch, dass der Gleitring in der Längsnut gesichert ist, auch das Paket aus Spiralkörper und Gleitring an der Mantelfläche des Hohlschafts gesichert. Somit fungiert die Führungsnut gemeinsam mit dem Gleitring auch als Verliersicherung.

Gemäß einer vorteilhaften Weiterbildung der Erfindung ist die Spindel-Stopper-Struktur durch Zusammenwirken des Spiralkörpers und des Gleitrings ausgebildet.

Gemäß einer vorteilhaften Weiterbildung der Erfindung weist der Gleitring einen sich radial nach innen erstreckenden Fortsatz auf, der dazu ausgebildet ist, in der Längsnut zu verlaufen und dort als Verdrehsicherung zu wirken.

Dieser sich radial nach innen erstreckende Fortsatz bietet eine einfache Möglichkeit, den Gleitring gegen Verdrehen zu sichern, so dass dieser zuverlässig axial in der Längsnut bewegbar ist.

Gemäß einer vorteilhaften Weiterbildung der Erfindung weist der Spiralkörper ein erstes sich in Axialrichtung des Spiralkörpers erstreckendes Anschlagelement und ein zweites sich in Axialrichtung des Spiralkörpers erstreckendes Anschlagelement auf.

Als Axialrichtung des Spiralkörpers wird die Richtung verstanden, die sich entlang der Achse erstreckt, um die der Spiralkörper gewickelt ist. Im eingebauten Zustand ist diese Achse zumindest im Wesentlichen konzentrisch zu der Rotationsachse des Hohlschafts und der Rotationsachse der Spindel ausgerichtet. Insbesondere erstreckt sich das erste Anschlagelement in eine Richtung entgegengesetzt zu der Erstreckungsrichtung des zweiten Spiralkörpers erstreckendes Anschlagelement auf. Dabei sind beide Richtungen allerdings Axialrichtungen des Spiralkörpers.

Gemäß einer vorteilhaften Weiterbildung der Erfindung ist bei Kontakt des ersten Anschlagelements mit dem Anschlagkörper die untere Endlage der Spindel festgelegt, wobei bei Kontakt des zweiten Anschlagelements mit dem Anschlagkörper zuzüglich des maximalen Verdrehwinkels des Spiralkörpers die obere Endlage der Spindel festgelegt ist.

Wenn der Spiralkörper ein starrer bzw. nicht drehelastischer Körper ist, ist der maximale Verdrehwinkel des Spiralkörpers Null, so dass die obere Endlage der Spindel bei Kontakt des zweiten Anschlagelements mit dem Anschlagkörper festgelegt ist.

Ist der Spiralkörper allerdings drehelastisch ausgebildet, so ist die Spindel auch nach Kontakt des zweiten Anschlagelements mit dem Anschlagkörper noch so weit bewegbar, wie es die Elastizität des Spiralkörpers zulässt. Bei Kontakt des zweiten Anschlagelements mit dem Anschlagkörper wird somit die Bewegung der Spindel nach oben abgedämpft.

Alternativ hierzu kann auch bei Kontakt des ersten Anschlagelements mit dem Anschlagkörper die obere Endlage der zentralen Spindel festgelegt sein, wobei bei Kontakt des zweiten Anschlagelements mit dem Anschlagkörper zuzüglich gegebenenfalls des maximalen Verdrehwinkels des Spiralkörpers die untere Endlage der Spindel festgelegt ist.

Ob die obere oder untere Endlage der zentralen Spindel festgelegt wird, ist von der Steigung des Spiralkörpers und der Steigung der zentralen Spindel abhängig. Insbesondere ist dies davon abhängig, ob es sich um ein rechtsdrehendes oder linksdrehendes Gewinde handelt. Nur wenn die Gewindesteigung der zentralen Spindel ungleich der des Spiralkörpers ist, ist das erste Anschlagelement auch die obere Spindelposition. Weisen die zentrale Spindel und der Spiralkörper die gleiche Steigungsrichtung auf, ist der Verfahrweg von der zentralen Spindel und dem Gleitring entgegengesetzt. Entsprechend gibt dann das erste Anschlagelement auch die untere Spindelposition vor.

Gemäß einer vorteilhaften Weiterbildung der Erfindung ist der Gleitring als zylindrische Spirale ausgebildet und weist ein oberes Ende und ein dem oberen Ende entgegengesetztes unteres Ende auf, wobei das obere Ende mit dem ersten Anschlagelement in Kontakt kommt, und wobei das untere Ende mit dem zweiten Anschlagelement in Kontakt kommt.

Da der Gleitring als zylindrische Spirale ausgebildet ist, kann ein besonders gutes Halten des Gleitrings innerhalb des Spiralkörpers erreicht werden. Außerdem ist es möglich, den Gleitring, das heißt die zylindrische Spirale, so auszubilden, dass sich das obere Ende und das untere Ende überschneiden. Das bedeutet, dass die zylindrische Spirale über einen Winkelbereich ausgebildet ist, der größer als 360 Grad ist, wobei die Überschneidung hierbei der Winkelbereich ist, der über die 360 Grad hinausgeht. Durch diese Überschneidung der Enden und die Anzahl der Windungen des Spiralkörpers kann die maximale Anzahl der möglichen Umdrehungen vorgegeben und/oder begrenzt werden.

Gemäß einer vorteilhaften Weiterbildung der Erfindung ist der Spiralkörper mittels des ersten Anschlagelements mit einem Adapterelement verbunden, um bei der Rotation des Rotors mitgedreht zu werden, wobei das Adapterelement den Rotor mit der Spindel verbindet, um die Spindel bei der Rotation des Rotors mitzudrehen.

Dabei ist das Adapterelement kraftschlüssig beispielsweise durch Pressverbindung, Schweißverbindung oder Formschluss mit der Spindel verbunden. Das Adapterelement kann beispielsweise formschlüssig mit dem Rotor verbunden sein. Hierzu ist das Adapterelement im Querschnitt betrachtet nicht rotationssymmetrisch ausgebildet. Beispielsweise kann die Außenform des Adapterelements im Querschnitt betrachtet (das heißt entlang der Rotationsachse R betrachtet) dreieckig, viereckig oder allgemein mehreckig, beispielsweise auch verzahnt, ausgebildet sein. Selbstverständlich ist die Innenform des Rotors dann im Querschnitt betrachtet komplementär zu der Form des Adapterelements ausgebildet.

Das heißt, dass das erste Anschlagelement des Spiralkörpers eine Doppelfunktion erfüllt und neben der Funktion als Anschlagelement auch als Mitnehmerelement (das heißt Verbindungselement) zum Rotor bzw. Adapter dient.

Dadurch, dass die Rotation des Rotors nicht direkt, sondern indirekt über den Adapter übertragen wird, ist es beispielsweise auch möglich, unterschiedliche Expansionsventile (mit beispielsweise unterschiedlichen Rotoren) mit möglichst vielen Gleichteilen zu produzieren.

Gemäß einer vorteilhaften Weiterbildung der Erfindung ist der Spiralkörper eine Drehfeder, die in Form einer aus Stahl hergestellten Schraubenfeder ausgebildet ist.

Bei dem Stahl handelt es sich insbesondere um einen Stahl der eine ausreichende Elastizität aufweist, um ihn zu einem Spiralkörper zu formen.

Dadurch ist die Herstellung des Spiralkörpers besonders günstig.

Gemäß einer vorteilhaften Weiterbildung der Erfindung ist der Hohlschaft aus einem Kunststoff, vorzugsweise aus Polyphenylensulfid (PPS), oder Polyetheretherketon (PEEK), oder aus Messing oder Bronze hergestellt.

Bei der Verwendung von Kunststoff wird beim Expansionsventil gegenüber der Verwendung eines metallischen Materials Gewicht eingespart. Außerdem sind die Kunststoffe PPS und PEEK Hochleistungswerkstoffe, so dass diese in einem hohen Temperaturbereich (bis zu 240 Grad) dauerhaft und kurzfristig sogar bis zu 300°C anwendbar sind. Folglich kann das Expansionsventil auch bei extremen Bedingungen eingesetzt werden, ohne dass ein Ausfall des Expansionsventils befürchtet werden muss

Gemäß einer vorteilhaften Weiterbildung der Erfindung weist das Expansionsventil ferner ein Hülsenelement auf, das einen Aufnahmebereich und eine Ventilnadel aufweist, wobei in dem Aufnahmebereich ein stempelartiger Endbereich der zentralen Spindel, eine Druckfeder und ein Kraftübertragungselement vollständig aufgenommen sind.

Da das Expansionsventil mit einem derartigen Hülsenelement ausgebildet ist, das zum einen die Funktion der Ventilnadel erfüllt und zum anderen einen Aufnahmebereich bereitstellt, kann eine besonders kompakte Ausbildung des Expansionsventils erreicht werden. Trotz der kompakten Ausführung können sämtliche Funktionen des Expansionsventils zuverlässig erfüllt werden.

Gemäß einer vorteilhaften Weiterbildung der Erfindung ist das Kraftübertragungselement so ausgebildet und angeordnet, dass es durch Kontakt mit der zentralen Spindel Axialkräfte von der zentralen Spindel über die Druckfeder auf das Hülsenelement überträgt, wobei das Kraftübertragungselement im Querschnitt betrachtet derart pilzförmig ausgebildet ist, dass Drehmomente nicht oder lediglich begrenzt von der zentralen Spindel auf das Kraftübertragungselement übertragen werden.

Da das Kraftübertragungselement pilzförmig ausgebildet ist, wird der Berührungspunkt, das heißt der Kraftübertragungspunkt, zu der zentralen Spindel klein. An dem Kraftübertragungspunkt werden dann Drehmomente nur begrenzt (über Reibung) auf das Kraftübertragungselement übertragen. Insgesamt führt auch dies zu einem besonders verschleißarmen Expansionsventil.

Gemäß einer vorteilhaften Weiterbildung der Erfindung begrenzen das Gehäuse und eine dem Gehäuse zugewandte Seite des Ventilbasiskörpers einen Gehäuse-Innenraum, wobei innerhalb des Hohlschafts ein Hohlschaft-Innenraum ausgebildet ist, wobei angrenzend an eine von dem Gehäuse abgewandte Seite des Ventilbasiskörpers in einem in einem Ventileinbauraum eingebauten Zustand des Expansionsventils ein Fluideingangsraum angeordnet ist, wobei ein erster Druckausgleichskanal zum Druckausgleich zwischen dem Fluideingangsraum und dem Gehäuse-Innenraum angeordnet ist, wobei der erste Druckausgleichskanal einen ersten Kanalbereich und einen zweiten Kanalbereich aufweist, und wobei der zweite Kanalbereich von der Längsnut ausgebildet wird.

Auch hierdurch kann eine besonders kompakte Ausbildung des Expansionsventils erfolgen. Insbesondere können Bauteile dadurch gespart werden, dass vorhandenen Bauteilen eine zweite Funktion zugewiesen wird.

So hat hier die Längsnut nicht nur die Funktion der Führung des Gleitrings, sondern übernimmt auch die Funktion eines Druckausgleichskanals. Die Längsnut erfüllt somit eine Doppelfunktion, da sie einerseits eine Führung des Gleitrings ermöglicht und zusätzlich einen Teil des zweiten Druckausgleichskanals ausbildet.

Gemäß einer vorteilhaften Weiterbildung der Erfindung ist ein zweiter Druckausgleichskanal zum Druckausgleich zwischen dem Hohlschaft-Innenraum und dem Gehäuse-Innenraum in einem Bereich einer maximalen radialen Ausdehnung der Längsnut und des Hohlschaft-Innenraums angeordnet.

Hierdurch wird auch ein sicherer Druckausgleich zwischen dem Hohlschaft-Innenraum und dem Gehäuse-Innenraum ermöglicht.

Weitere Vorteile der Erfindung gehen aus der Beschreibung und den Zeichnungen hervor. Die Erfindung wird nachstehend anhand der Beschreibung von Ausführungsbeispielen unter Bezugnahme auf die beiliegenden Zeichnungen näher erläutert.

Die zu der Erläuterung der Ausführungsbeispiele verwendeten Zeichnungen zeigen in:
- Fig. 1: einen Längsschnitt eines erfindungsgemäßen Expansionsventils in einem in einem Ventileinbauraum eingebauten Zustand;
- Fig. 2: einen detaillierten Längsschnitt eines Bewegungsmechanismus des erfindungsgemäßen Expansionsventils;
- Fig. 3: eine schematische Darstellung eines Adapterelements des erfindungsgemäßen Expansionsventils;
- Fig. 4: einen detaillierten Längsschnitt eines Adapterelements und eines Rotors des erfindungsgemäßen Expansionsventils;
- Fig. 5: eine schematische Darstellung einer Führungsfeder des erfindungsgemäßen Expansionsventils;
- Fig. 6: eine schematische Darstellung eines Gleitrings des erfindungsgemäßen Expansionsventils;
- Fig. 7: eine Draufsicht auf den Gleitring aus Fig. 6;
- Fig. 8: eine schematische Darstellung eines Hohlschafts des erfindungsgemäßen Expansionsventils;
- Fig. 9: eine schematische Darstellung der Spindel-Stopper-Geometrie des erfindungsgemäßen Expansionsventils;
- Fig. 10: einen Längsschnitt einer Kraftübertragung und Drehmomentbegrenzungseinrichtung des erfindungsgemäßen Expansionsventils;
- Fig. 11: einen Längsschnitt eines Hülsenelements des erfindungsgemäßen Expansionsventils;
- Fig. 12: eine schematische Darstellung eines Kraftübertragungselements des erfindungsgemäßen Expansionsventils;
- Fig. 13: eine schematische Darstellung einer Druckfeder des erfindungsgemäßen Expansionsventils;
- Fig. 14: einen Längsschnitt eines Ventilbasiskörpers des erfindungsgemäßen Expansionsventils;
- Fig. 15: eine schematische Darstellung des Ventilbasiskörpers aus Fig. 14;
- Fig. 16: ein detaillierter Längsschnitt des Ventilbasiskörpers des erfindungsgemäßen Expansionsventils; und
- Fig. 17: ein detaillierter Längsschnitt eines Hohlschafts des erfindungsgemäßen Expansionsventils.

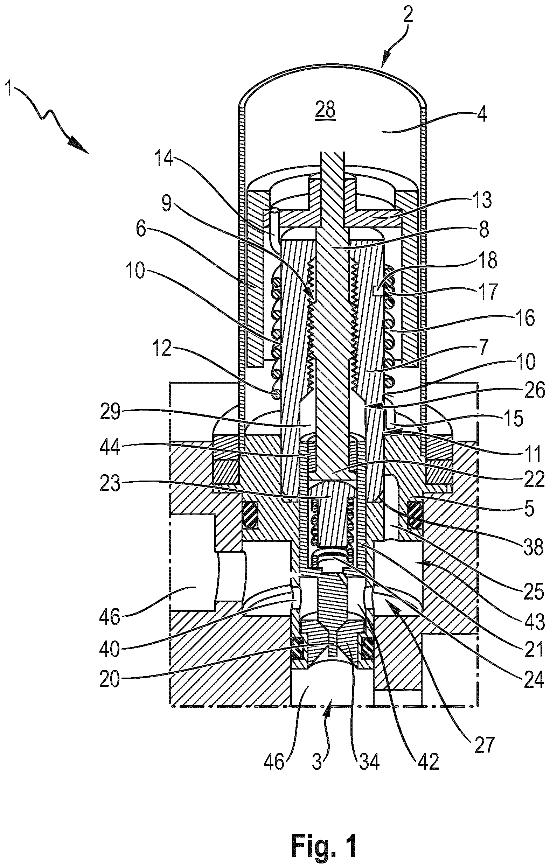

Die Fig. 1 zeigt einen Längsschnitt eines erfindungsgemäßen Expansionsventils 1 in einer beispielhaften Ausführungsform. Zu Beschreibungszwecken ist in Fig. 1 eine Oberseite 2 und eine Unterseite 3 definiert. Die Oberseite 2 und die Unterseite 3 werden auch jeweils zur Beschreibung einzelner Komponenten verwendet, deren Gesamtanordnung in Fig. 1 erkennbar ist.

Das Expansionsventil 1 weist einen Ventilbasiskörper 5 und ein Gehäuse 4 auf. In Fig. 1 ist das Expansionsventil 1 in einem Zustand dargestellt, in dem dieses in einem Ventileinbauraum 43 eingebaut ist. Als Ventileinbauraum 43 wird allgemein ein Hohlraum verstanden, in den das Expansionsventil 1 eingebaut werden soll bzw. wird.

Da der Ventilbasiskörper 5 ein einstückig ausgebildeter Körper ist, kann dieser patronenartig in den Ventileinbauraum 43 gesteckt werden. Entsprechend ist das gesamte Expansionsventil 1 einfach in den Ventileinbauraum 43 ein- und ausbaubar.

In dem in dem Ventileinbauraum 43 eingebauten Zustand des Expansionsventils 1 ist ein Fluidkanal 46 ausgebildet. Dieser erstreckt sich in Fig. 1 von einem, seitlichen Bereich (linke Seite in Fig. 1) kommend in Richtung des Ventilbasiskörpers 5 und bildet um einen unteren Bereich (das heißt zur Unterseite 3 hin) des Ventilbasiskörpers 5 herum einen Fluideingangsraum 27.

Der Fluideingangsraum 27 ist über Fluidbohrungen 40 mit einem unteren Innenbereich 42 des Ventilbasiskörpers 5 verbunden. In diesem unteren Innenbereich 42 ist auch eine Ventilnadel 20 des Expansionsventils 1 angeordnet ist.

Wird das Expansionsventil 1 geöffnet, so ist der Fluidkanal 46 von dem seitlichen Bereich des Expansionsventils 1, durch den Fluideingangsraum 27, durch die Fluidbohrung 40, durch den unteren Innenbereich 42 des Ventilbasiskörpers 5 und durch eine Ventilöffnung, die mittels der Ventilnadel 20 verschließbar ist, zu einem Bereich unter dem Expansionsventil 1 hin ausgebildet.

An einer oberen Seite (das heißt zu der Oberseite 2 hin) des Ventilbasiskörpers 5 ist das Gehäuse 4 angeordnet. Insbesondere ist das Gehäuse 4 hülsenförmig ausgebildet.

Sämtliche funktionellen Elemente bzw. Komponenten des Expansionsventils 1 sind innerhalb des Gehäuses 4 oder innerhalb des Ventilbasiskörpers 5 angeordnet. Das Gehäuse 4 ist radial von einem - hier nicht dargestellten - Schrittmotor bzw. einem Stator hiervon umgeben.

Der Ventilbasiskörper 5 schließt das Gehäuse 4 auf der Unterseite 3 ab. In dem Gehäuse 4 ist ein Rotor 6 (des Schrittmotors) angeordnet, der seine Rotation auf eine zentrale Spindel 8 überträgt.

In Figur 1 wird die Rotation von dem Rotor 6 über ein Adapterelement 13 auf die zentrale Spindel 8 übertragen. Die zentrale Spindel 8 weist ein Außengewinde auf, das mit einem Innengewinde eines Hohlschafts 7 als Gewindeverbindung 9 verbunden ist.

Durch die Gewindeverbindung 9 bewegt sich die zentrale Spindel 8 entlang einer Rotationsachse R axial nach unten (das heißt von der Oberseite 2 zu der Unterseite 3) bzw. nach oben (das heißt von der Unterseite 3 zu der Oberseite 2). Folglich kann durch diesen Bewegungsmechanismus die Rotationsbewegung des Rotors 6 in eine axiale Bewegung überführt werden.

Um den Hohlschaft 7 herum ist ein Spiralkörper 12 ausgebildet. In der in Fig. 1 gezeigten Ausbildungsform ist dieser Spiralkörper 12 als Führungsfeder 12 ausgebildet. Dabei wird für die Führungsfeder und für den Spiralkörper das Bezugszeichen 12 verwendet.

In dem Spiralkörper 12 (das heißt in einem Gewindegang 16 hiervon) verläuft ein Anschlagkörper. Hier ist der Anschlagkörper als Gleitring 17 ausgebildet.

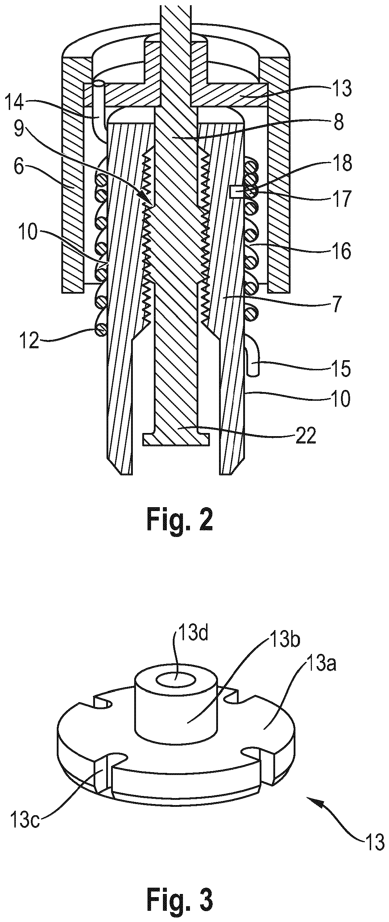

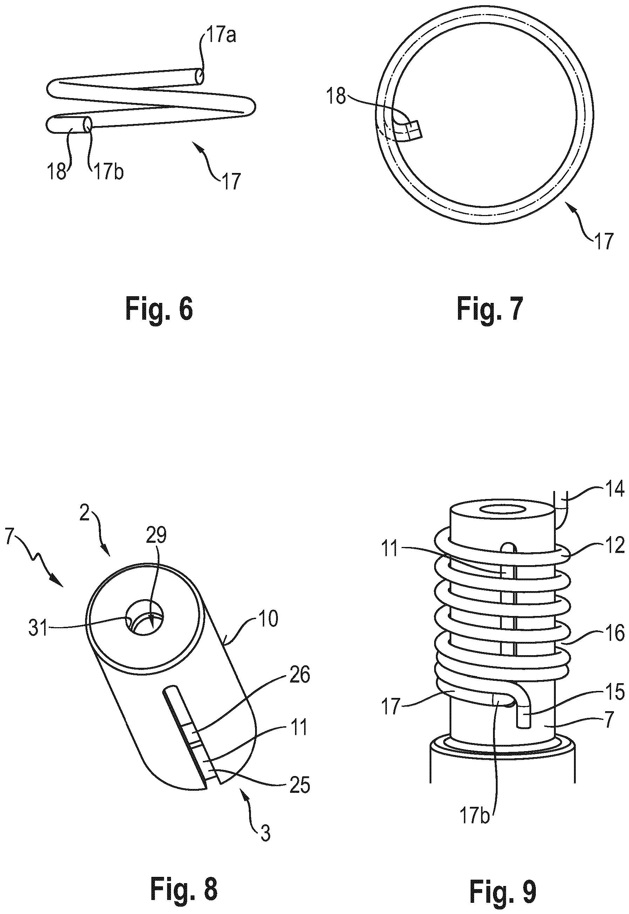

Die Führungsfeder 12 und der Gleitring 17 bilden eine Spindel-Stopper-Geometrie aus, die eine obere (axiale) Endlage und eine untere (axiale) Endlage der zentralen Spindel 8 vorgeben. Die Funktion der Spindel-Stopper-Struktur wird nochmals genauer unter Bezugnahme auf Fig. 2 und Fig. 9 erklärt.

Ein unterer Teil (das heißt zu der Unterseite 3 hin) der zentralen Spindel 8 ist in einem Hülsenelement 21 aufgenommen. Das Hülsenelement 21 selbst ist in dem Ventilbasiskörper 5 aufgenommen. Ferner ist auch ein unterer Bereich des Hohlschafts 7 in dem Ventilbasiskörper 5 aufgenommen.

Insbesondere ist das Hülsenelement 21, wie in Fig. 1 gezeigt, bereichsweise in dem Hohlschaft 7 aufgenommen, der wiederum bereichsweise in dem Ventilbasiskörper 5 aufgenommen ist. Das bedeutet, dass eine innere Umfangsfläche des Ventilbasiskörpers 5 mit einer äußeren Umfangsfläche des Hohlschafts 7 in Kontakt steht. Außerdem steht eine innere Umfangsfläche des Hohlschafts 7 mit einer äußeren Umfangsfläche des Hülsenelements 21 in Kontakt.

An einem unteren Bereich weist das Hülsenelement 21 die Ventilnadel 20 auf. Das Hülsenelement 21 ist ein einstückiger Körper, das heißt, dass die Ventilnadel 20 hülsenartig ausgebildet ist.

Die Ventilnadel 20 sitzt in einem Ventilsitz 34, wobei durch Anheben (nach oben, das heißt zur Oberseite 2 hin) aus dem Ventilsitz 34 eine Öffnung durch den Ventilsitz 34 hindurch freigegeben wird und ein Fluid durch diesen hindurchströmen kann.

In Fig. 1 ist die Ventilnadel 20 in ihrem aufgesetzten Zustand dargestellt, in dem diese dichtend auf den Ventilsitz 34 drückt.

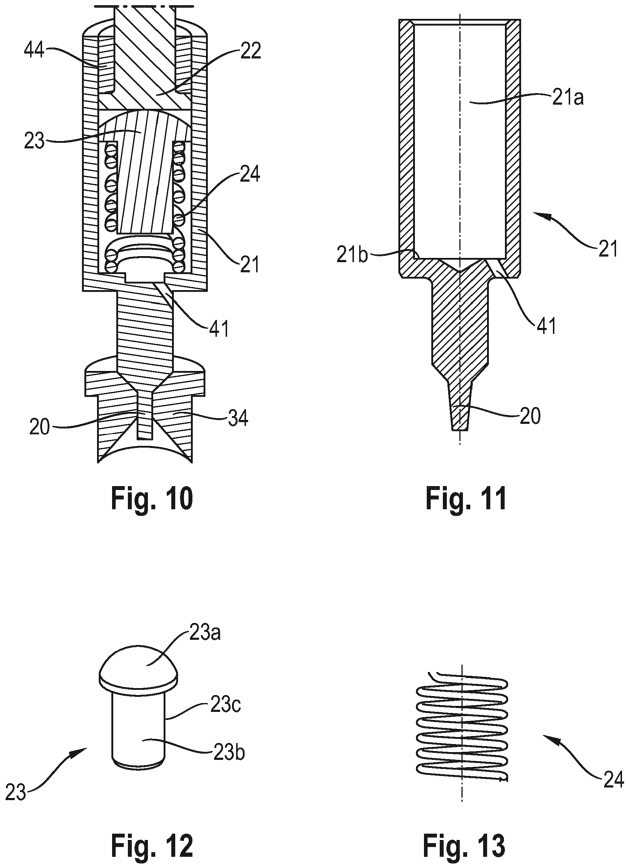

Innerhalb des Hülsenelements 21 sind Elemente angeordnet, die zur Kraftübertragung und Drehmomentbegrenzung zwischen der Spindel 8 und dem Hülsenelement 21 dienen. Diese Elemente werden genauer unter Bezugnahme auf Fig. 10 beschrieben.

Die Fig. 2 zeigt einen oberen Teil des Expansionsventils 1 genauer. Insbesondere zeigt Fig. 2 den Rotor 6, der über den Adapter 13 mit der zentralen Spindel 8 verbunden ist, die wiederum über die Gewindeverbindung 9 mit dem Hohlschaft 7 verbunden ist.

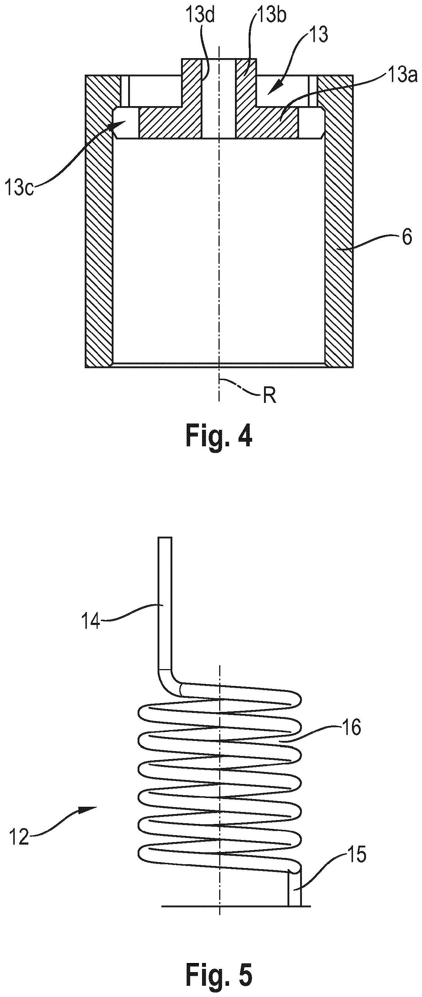

Wie in Fig. 2 zu erkennen, ist die Führungsfeder 12 an einer Mantelfläche 10 des Hohlschafts 7 angeordnet. Insbesondere handelt es sich bei der Führungsfeder 12 um die in Fig. 5 dargestellte Spiralfeder. Diese Spiralfeder weist ein erstes Anschlagelement 14 und ein zweites Anschlagelement 15 auf. Die beiden Anschlagelemente 14, 15 sind an jeweiligen Enden der als Spiralfeder ausgebildeten Führungsfeder 12 angeordnet. Insbesondere erstreckt sich das erste Anschlagelement 14 von einem oberen Ende der Spiralfeder axial nach oben, wohingegen sich das zweite Anschlagelement 15 von einem unteren Ende der Führungsfeder 12 axial nach unten erstreckt.

Wie in Fig. 2 zu erkennen, ist das erste Anschlagelement 14 mit dem Adapterelement 13 verbunden. Das bedeutet auch, dass die Führungsfeder 12 bzw. der Spiralkörper 12 sich mit dem Adapterelement 13 mitdrehen kann. Hierzu weist das Adapterelement 13 dezentrale Öffnungen 13c (siehe Fig. 3) auf, in die das erste Anschlagelement 14 eingesetzt werden kann bzw. ist.

Das zweite Anschlagelement 15 ist, wie in Fig. 1 dargestellt, in Richtung des Ventilbasiskörpers 5 ausgerichtet. Vorzugsweise kann dabei das zweite Anschlagelement 15 im Betrieb auf dem Basiskörper 5 schleifen. Alternativ hierzu könnte in dem Basiskörper 5 eine kreisförmige Nut ausgebildet sein, in der das zweite Anschlagelement 15 des Spiralkörpers 12 bzw. der Führungsfeder 12 verläuft und geführt ist.

Wie in Fig. 3 dargestellt, weist das Adapterelement 13 einen plattenförmigen Basisbereich 13a und einen Aufnahmebereich 13b für die zentrale Spindel 8 auf. Dabei erstreckt sich der Aufnahmebereich 13b zentral von dem plattenförmigen Basisbereich 13a axial in Richtung der Rotationsachse R (siehe Fig. 4).

Um die Rotationsachse R rotiert der Rotor 6, das Adapterelement 13, der Spiralkörper 12 und die zentrale Spindel 8.

Das Adapterelement 13 weist mehrere dezentrale Öffnungen 13c auf, die dezentral, also entfernt von dem Zentrum, in dem plattenförmigen Basisbereich 13a ausgebildet sind. In Fig. 3 sind vier dezentrale Öffnungen 13c in Form von Langlöchern an einem äußeren Umfang des plattenförmigen Basisbereichs 13a ausgebildet. Die Ausbildung der dezentralen Öffnungen 13c als Langlöcher bringt insbesondere fertigungsbezogene Vorteile mit sich.

In eine der dezentralen Öffnungen 13c erstreckt sich der obere Endbereich, das heißt das erste Anschlagelement 14, der Führungsfeder 12. Die restlichen dezentralen Öffnungen 13c in dem plattenförmigen Basisbereich 13a des Adapterelements 13 können beispielsweise dazu dienen, um für einen ausreichenden Druckausgleich zwischen einem Gehäuseinnenraum 28 oberhalb des Adapterelements 13 und einem Gehäuseinnenraum 28 unterhalb des Adapterelements 13 zu sorgen.

Innerhalb des Aufnahmebereichs 13b des Adapterelements 13 ist eine zentrale Durchgangsöffnung 13d ausgebildet, in die ein oberer Bereich der zentralen Spindel 8 aufnehmbar ist. Dieser obere Bereich der Spindel 8 ist im Querschnitt betrachtet komplementär zu der zentralen Durchgangsöffnung 13d ausgebildet. Im Querschnitt betrachtet bedeutet in diesem Zusammenhang, dass die beiden Bauteile entlang der Rotationsachse R betrachtet werden.

Zur Kraftübertragung wäre es denkbar, dass die beiden Elemente im Querschnitt keine Kreisform, sondern eine Form ausbilden, die nicht rotationssymmetrisch ist. So kann eine einfache Übertragung von Drehmoment von dem Adapterelement 13 auf die zentrale Spindel 8 stattfinden. Beispielsweise kann die zentrale Durchgangsöffnung 13d entsprechend mehreckig, vorzugsweise viereckig, ausgebildet sein. Insgesamt ist jedoch jede nicht-rotationssymmetrische Ausbildung zum einfachen Übertragen des Drehmoments denkbar. Vorzugsweise ist der Querschnitt jedoch eine Kreisform und die Kraftübertragung erfolgt beispielsweise über eine Schweißverbindung.

Wie in Fig. 4 dargestellt, ist ein Außenumfang des plattenförmigen Basisbereichs 13a mit dem Rotor 6 verbunden. Hierdurch wird das Drehmoment des Rotors 6 auf das Adapterelement 13 übertragen. Wie ebenfalls in Fig. 4 und Fig. 2 zu erkennen, weist ein oberer Bereich des Rotors 6 einen Anschlag auf, so dass das Adapterelement 13 nicht durch den Rotor 6 hindurchrutschen kann. Dies ist insbesondere beim Zusammenbau vorteilhaft und dient zur Vermeidung von Fehlern.

Die Verbindung zwischen Rotor 6 und Adapterelement 13 kann stoffschlüssig, formschlüssig oder kraftschlüssig sein. Wesentlich ist an dieser Stelle, dass ein Drehmoment von dem Rotor 6 auf das Adapterelement 13 übertragen werden kann. Prinzipiell wäre es auch denkbar, dass das Adapterelement 13 und der Rotor 6 als einteiliges Bauteil ausgebildet sind.

In Fig. 2 ist im Schnitt der Gleitring 17 zu erkennen, der in dem Gewindegang 16 der Führungsfeder 12 verläuft.

Eine größere Darstellung des Gleitrings 17 ist in den Fig. 6 und 7 gegeben. Hier ist zu erkennen, dass der Gleitring 17 als spiralförmiges Element ausgebildet ist. Insbesondere ist der Gleitring 17 als zylindrische Spirale ausgebildet, die im eingebauten Zustand um die Rotationsachse R gewickelt ist.

Wie in Fig. 6 dargestellt, weist der Gleitring 17 ein oberes Ende 17a und ein unteres Ende 17b auf. Das obere Ende 17a und das untere Ende 17b können sich überschneiden, so dass ein spiralförmiger Körper mit mehr als einer Wicklung ausgebildet wird. Durch diese Überschneidung der Enden und die Anzahl der Windungen der Führungsfeder 12 wird die maximale Anzahl der möglichen Umdrehungen der zentralen Spindel 8 begrenzt.

An einem seiner Enden, hier am unteren Ende 17b, weist der Gleitring 17 einen sich radial nach innen erstreckenden Fortsatz 18 auf. Wie in Fig. 2 zu erkennen, verläuft dieser Fortsatz 18 in dem Hohlschaft 7. Genauer gesagt, ist der Fortsatz 18 des Gleitrings 17 in eine Längsnut 11 des Hohlschafts 7 einsetzbar bzw. bei Gebrauch eingesetzt. Diese Längsnut 11 ist besonders gut in Fig. 8 und Fig. 9 zu erkennen.

Fig. 8 zeigt den Hohlschaft 7 in einer schematischen Darstellung. Der Hohlschaft 7 ist als Hohlzylinder ausgebildet, der einen Hohlschaft-Innenraum 29 umschließt. Wie in Fig. 8 zu erkennen, ist an einem oberen Bereich des Hohlschafts 7 eine Hohlschaft-Bohrung 31 angeordnet, durch die die zentrale Spindel 8 führbar ist. An der Mantelfläche 10 ist die Längsnut 11 angeordnet, die sich axial (im eingebauten Zustand parallel zu der Rotationsachse R) erstreckt. Die Längsnut 11 ist vorzugsweise nach unten hin (das heißt zu der Unterseite 3 hin) offen ausgebildet. Alternativ kann diese allerdings, wie in Fig. 9 dargestellt, nach oben hin und nach unten hin begrenzt sein.

Im eingebauten Zustand ist der Fortsatz 18 des Gleitrings 17 in dieser Längsnut 11 angeordnet. Dadurch kann sich der Gleitring 17 nicht relativ zu dem Hohlschaft 7 drehen. Das heißt, dass mittels der Längsnut 11 und des Fortsatzes 18 eine Drehsicherung des Gleitrings 17 erfolgt. Folglich kann sich der Gleitring 17 nur axial nach oben (entlang der Längsnut 11) und axial nach unten (ebenfalls entlang der Längsnut 11) bewegen.

Wenn sich im Betrieb der Rotor 6 dreht und das Adapterelement 13 diese Drehbewegung auf die Führungsfeder 12 (über die dezentrale Öffnung 13c) überträgt, dreht sich die Führungsfeder 12 relativ zu dem Hohlschaft 7 und auch relativ zu dem in dem Hohlschaft 7 (das heißt in der Längsnut 11) axial gesicherten Gleitring 17. Durch die Rotation der Führungsfeder 12 wird der Gleitring 17 allerdings dazu angeregt, sich in dem Gewindegang 16 der Führungsfeder 12 zu bewegen. Entsprechend bewegt sich der Gleitring 17 entlang des Gewindegangs 16 nach oben und nach unten. Insbesondere in Fig. 9 ist deutlich zu erkennen, dass der spiralförmig ausgebildete Gleitring 17 in dem Gewindegang 16 der Führungsfeder 12 verläuft.

Die Spindel-Stopper-Geometrie der vorliegenden Erfindung wird nun dadurch ausgebildet, dass der Gleitring 17 sich nur so weit nach oben entlang des Gewindegangs 16 bewegen kann, bis der Gleitring 17 mit seinem oberen Ende 17a an das erste Anschlagelement 14 der Führungsfeder 12 anstößt.

Ob die obere oder untere Endlage der zentralen Spindel 8 festgelegt wird, ist von der Steigung der Führungsfeder bzw. des Spiralkörpers 12 abhängig. Wenn die Gewindesteigung der Spindel 8 ungleich der des Spiralkörpers 12 ist, dient das erste Anschlagelement 14 zum Festlegen der oberen Endlage der zentralen Spindel 8. Weisen die Spindel 8 und der Spiralkörper 12 die gleiche Steigungsrichtung auf, gibt hingegen das erste Anschlagelement 14 die untere Endlage der zentralen Spindel 8 vor. Vorzugsweise sind die Gewindesteigung der zentralen Spindel 8 und die Gewindesteigung des zentralen Spiralkörpers 12 gleich. Erfindungsgemäß ist vorgesehen, dass der Gleitring, bzw. Anschlagkörper 17 als Teil der Spindel Stopper-Struktur eine obere und eine untere Endlage der zentralen Spindel 8 vorgibt.

Sobald der Gleitring 17 an dem ersten Anschlagelement 14 anstößt, ist in diese Drehrichtung keine weitere Rotation der Führungsfeder 12 relativ zu dem Gleitring 17 möglich. Genauer gesagt wird die Rotation des Adapterelements 13 dadurch abgebremst, dass die Führungsfeder 12 blockiert, das heißt, dass die Führungsfeder 12 sich nicht weiterdrehen kann, da sie durch den Gleitring 17 gesperrt ist.

Der Brems-Kraftfluss erfolgt hierbei von der Längsnut 11 des Hohlschafts 7 auf den Fortsatz 18 des Gleitrings 17 und von dem Fortsatz 18 zu einem oberen Ende 17a des Gleitrings 17 zu dem ersten Anschlagelement 14 der Führungsfeder 12 und von dem ersten Anschlagelement 14 auf die dezentrale Öffnung 13c des Adapterelements 13. Selbstverständlich kann eine gewisse Dehnung der einzelnen Elemente vorkommen, die zu einer Dämpfung der Bremskraft führen, die durchaus gewollt sein kann. Insbesondere ist dies der Fall bei dem unteren Anschlagspunkt.

Figur 9 zeigt den Gleitring 17 an diesem unteren Anschlagspunkt. Wie in Fig. 9 zu erkennen, hat sich die Führungsfeder 12 so weit relativ zu dem Gleitring 17 (und dem Hohlschaft 7) gedreht, dass der Gleitring 17 bis an ein unteres Ende der Führungsfeder 12 gewandert ist. Dort kommt das untere Ende 17b des Gleitrings 17 mit dem zweiten Anschlagselement 15 der Führungsfeder 12 in Kontakt. Der Brems-Kraftfluss verläuft nun von der Längsnut 11 des Hohlschafts 7 auf das untere Ende 17b des Gleitrings 17 und von dem unteren Ende 17b des Gleitrings 17 auf das (untere) zweite Anschlagelement 15 der Führungsfeder 17. Von diesem zweiten Anschlagselement 15 verläuft der Brems-Kraftfluss entlang der gesamten Führungsfeder 12 bis zu dem ersten Anschlagselement 14 und dann wieder zu der dezentralen Öffnung 13c des Adapterelements 13.

Das heißt, dass im Gegensatz zu dem oberen Anschlagspunkt hier der Brems-Kraftfluss entlang der gesamten Führungsfeder 12 ausgebildet ist. Ist die Führungsfeder 12 als starrer Spiralkörper ausgebildet, tritt keine oder nur eine vernachlässigbare Dämpfung der auf die zentrale Spindel 8 wirkenden Bremskraft auf.

Je nach Steigung des Spiralkörpers ergibt sich bei Kontakt des ersten Anschlagselements 14 mit dem oberen Ende 17a des Gleitrings 17 die untere oder obere Endlage der Spindel 8 und bei Kontakt des zweiten Anschlagselements 15 mit dem unteren Ende 17b (optional zuzüglich des maximalen Verdrehwinkels des Spiralkörpers 12) die obere oder untere Endlage der Spindel 8.

In den Fig. 10 bis 13 ist der Kraftübertragungsmechanismus von der Spindel 8 auf das Hülsenelement 21 bzw. die Ventilnadel 20 dargestellt. Die zentrale Spindel 8 weist einen stempelartigen Endbereich 22 auf, der an einem unteren Ende der Spindel 8 ausgebildet ist.

Dieser stempelartige Endbereich 22 ist in dem Hülsenelement 21 aufgenommen. Genauer gesagt, ist der stempelartige Endbereich 22 in einem Aufnahmebereich 21a des Hülsenelements 21 aufgenommen. Wie in Fig. 10 dargestellt, ist ferner eine Druckfeder 24 und ein Kraftübertragungselement 23 in dem Aufnahmebereich 21a angeordnet.

Die Druckfeder 24, die in einer vergrößerten Ansicht in Fig. 13 dargestellt ist, ist mit einem Hülsenboden 21b des Hülsenelements 21 in Kontakt. Bei der Druckfeder 24 handelt es sich um eine zylindrische Spiralfeder, die mit einem unteren Bereich auf dem Hülsenboden 21b des Hülsenelements 21 aufliegt.

Wie in Fig. 12 dargestellt, weist das Kraftübertragungselement 23 einen Kopfbereich 23a und einen Schaftbereich 23b auf. Der Schaftbereich 23b weist wiederum eine Mantelfläche 23c auf.

Der Schaftbereich 23b ist innerhalb der Druckfeder 24 anordenbar. Mit anderen Worten ist die Druckfeder 24 nach innen durch die Mantelfläche 23c des Schaftbereichs 23b gestützt. Das Kraftübertragungselement 23 dient somit auch als Führungselement für die Druckfeder 24, wobei ein Umknicken der Druckfeder 24 ferner auch durch die Innenumfangsfläche des Aufnahmebereichs 21a verhindert wird. Insgesamt ist die Druckfeder 24 somit durch den Aufnahmebereich 21a und den Aufnahmebereich 21a gestützt.

Wie in Fig. 12 zu erkennen, weist das Kraftübertragungselement 23 insgesamt eine Pilzform auf. Das bedeutet, dass der Kopfbereich 23a teilkugelförmig, beispielsweise halbkugelförmig ausgebildet ist, und einen Außenumfang aufweist, der größer ist als der Außenumfang des Schaftbereichs 23b. Mit anderen Worten ist der Kopfbereich 23a pilzkopfförmig und der Schaftbereich 23b pilzstilförmig ausgebildet.

Da der Kopfbereich 23a breiter ausgebildet ist, ist ein Anstoßbereich zwischen Kraftübertragungselement 23 und Druckfeder 24 ausgebildet. Das heißt, dass ein oberer Bereich der Druckfeder 24 mit einem unteren Bereich des Kopfbereichs 23a zum Anliegen kommen kann.

Die Pilzkopfform des Kopfbereichs 23a hat allerdings ferner auch den Vorteil, dass der Kontaktbereich zu dem stempelartigen Endbereich 22 im Wesentlichen punktförmig ist. Über diesen punktförmigen Kontaktbereich kann eine Axialkraft (das heißt von oben (2) nach unten (3) oder von unten (3) nach oben (2)) gut übertragen werden, wohingegen ein Drehmoment nur sehr schlecht übertragen wird. Somit wird von dem stempelartigen Endbereich 22 kein wesentliches Drehmoment auf das Kraftübertragungselement 23 übertragen. Daher kann das Kraftübertragungselement 23 als eine Art Drehmomentbegrenzungseinrichtung dienen.

Wenn von dem Rotor 6 über das Adapterelement 13 eine Drehbewegung auf die zentrale Spindel 8 übertragen wird, bewegt sich der stempelartige Endbereich 22 nach oben oder nach unten. Wenn der stempelartige Endbereich 22 sich nach unten bewegt, drückt dieser gegen das Kraftübertragungselement 23, das wiederum gedämpft über die Druckfeder 24 auf den Hülsenboden 21b und hiermit auf das Hülsenelement 21 und die Ventilnadel 20 drückt. Das bedeutet, dass die Ventilnadel 20 in Richtung des Ventilsitzes 34 gedrückt wird.

Ein oberer Bereich (zu der Oberseite 2 hin) des Hülsenelements 21 ist durch eine Buchse 44 verschlossen. Die Buchse 44 ist hohlzylinderförmig ausgebildet und aus einem anderen Material als die Spindel 8 ausgebildet. Insbesondere ist das erste Material, aus dem die Spindel 8 hergestellt ist, härter als das zweite Material, aus dem die Buchse 44 hergestellt ist. So kann eine geringe Reibung zwischen der Spindel 8, also dem stempelartigen Endbereich 22, und der Buchse 44 erreicht werden. Das ist vorteilhaft, damit die Ventilnadel 20 nicht lange in dem Ventilsitz 34 mitdreht.

Ferner bedeutet das, dass bei einer Reibung zwischen dem ersten Material und dem zweiten Material ein gezielter Verschleiß am (weniger harten) zweiten Material stattfindet. Hierdurch lässt sich somit der Verschleiß der Kraftübertragungseinrichtung bzw. der betroffenen Bauteile steuern.

Die Buchse 44, das Hülsenelement 21 mit Ventilnadel 20, und das Kraftübertragungselement 23 drehen so lange mit der gleichen Geschwindigkeit wie die Spindel 8, bis die Ventilnadel 20 in dem Ventilsitz 34 in ihrer axial Bewegung behindert wird und das vorherrschende Drehmoment kleiner ist als zwischen der Kontaktstelle Buchse 44 zu Spindel 22.

Erst wenn das gebremste Drehmoment (Haftreibmoment) im Ventilsitz 34 groß genug ist, stoppt die Ventilnadel 20. Ab dann findet eine Relativbewegung zwischen Spindel 22 und Buchse 44 findet statt. Diese findet kurz stirnseitig (Buchse 44) und dann nur noch partiell an der inneren Mantelfläche der Buchse 44 statt.

Der Hauptgrund des Nachdrehens der Spindel 8 nachdem die Ventilnadel 20 im Ventilsitz 34 sitzt, liegt darin, ein sicheres Schließen auch noch nach längerer Laufzeit sicherzustellen. So soll auch nach Jahren des Verschleißes ein sicheres Schließen des Ventils gegeben sein. Daher dreht die Spindel 8 mehrere Schritte, beispielsweise 10 Schritte, nach. Dieses Nachdrehen erfordert eine zuverlässige Drehmomententkopplung.

Der Vorteil bei der Verwendung der Buchse 44 liegt insbesondere darin, dass diese gezielt Verschleiß ausgesetzt werden kann und für eine niedrige Reibung zu der Spindel 8 sorgt. So verschleißt weder das Hülsenelement 21 noch die (zentrale) Spindel 8. Dadurch, dass der Kraftübertragungsbereich zwischen dem Kraftübertragungselement 23 und der zentralen Spindel 8 durch die spezielle Form des Kopfbereichs 23a möglichst klein gehalten wird, tritt hier auch keine besonders hohe Reibung auf, so dass das Kraftübertragungselement 23 auch aus dem ersten Material hergestellt werden kann.

Bei dem ersten Material handelt es sich beispielsweise um Edelstahl und bei dem zweiten Material handelt es sich beispielsweise um eine Kupferlegierung, vorzugsweise um Messing. Die Materialpaarung Messing und Edelstahl ist besonders vorteilhaft. Dadurch, dass das Hülsenelement 44 in Längserstreckungsrichtung (das heißt entlang der Rotationsachse R) relativ lang ausgebildet ist, ist auch ausreichend Material vorhanden, das von dieser abgetragen werden kann.

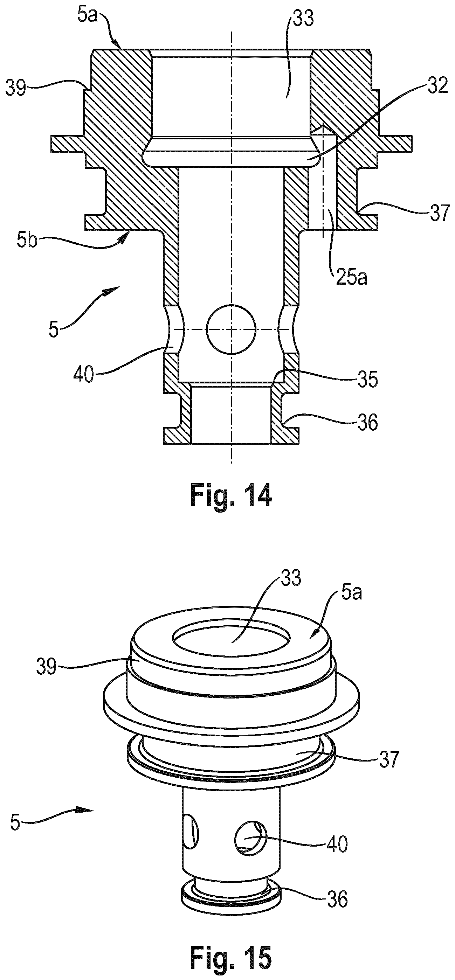

Fig. 14 zeigt einen Längsschnitt des Ventilbasiskörpers 5. Der Ventilbasiskörper 5 weist eine dem Gehäuse 4 zugewandte Seite 5a auf, die eine obere Seite (zu der Oberseite 2 hin) des Ventilbasiskörpers 5 ist. Auf einer entgegengesetzten Seite zu der dem Gehäuse 4 zugewandten Seite 5a weist der Ventilbasiskörper5 eine dem Gehäuse 4 abgewandte Seite 5b auf.

Wie in Fig. 1 zu erkennen, ist angrenzend an diese von dem Gehäuse 4 abgewandte Seite 5b des Ventilbasiskörpers 5 in dem in dem Ventileinbauraum 43 eingebauten Zustand der Fluideingangsraum 27 ausgebildet.

Der Ventilbasiskörper 5 weist ferner einen Aufnahmebereich 33 auf, in dem (in dem zusammengebauten Zustand), wie in Fig. 1 dargestellt, zunächst der Hohlschaft 7 aufgenommen und innerhalb des Hohlschafts 7 das Hülsenelement 21 aufgenommen ist.

In einem unteren Bereich des Aufnahmebereichs 33 ist ein umlaufender Freistich 32 ausgebildet.

Weiter unten im Ventilbasiskörper 5 ist ein Ventilsitz-Aufnahmebereich 35 angeordnet. Dieser Ventilsitz-Aufnahmebereich 35 bietet einen Anschlag für den Ventilsitz 34, wenn dieser von oben in den Ventilbasiskörper 5 geschoben wird. Hierdurch wird ein sicherer und definierter Sitz des Ventilsitzes 34 erreicht.

An einem äußeren unteren Bereich des Ventilbasiskörpers 5 ist ein unterer Dichtungs-Aufnahmebereich 36 ausgebildet. Wie in Fig. 1 zu erkennen, kann in diesen in dem zusammengebauten Zustand ein ringförmiger Dichtungskörper eingesetzt sein. Dieser dichtet den Fluideingangsraum 27 von einem unter dem Expansionsventil 1 angeordneten Bereich des Fluidkanals 46 ab und umgekehrt.

Zurück zu Fig. 14 - dort ist in einem mittleren bis oberen Bereich des Ventilbasiskörpers 5 ein oberer Dichtungs-Aufnahmebereich 37 ausgebildet. Wie in Fig. 1 zu erkennen, ist in diesem oberen Dichtungs-Aufnahmebereich 37 im eingebauten Zustand ebenfalls ein ringförmiges Dichtungselement angeordnet, das insbesondere den Fluideingangsraum 27 von der Außenumgebung abdichtet.

Wie ferner in den Fig. 14 bis 16 zu erkennen, ist an einer Oberseite 2 des Ventilbasiskörpers 5 ein Gehäusesitz 39 angeordnet. Dieser ist insbesondere radial umlaufend an dem oberen Bereich (an der dem Gehäuse 4 zugewandten Seite) des Ventilbasiskörpers 5 so angeordnet, dass dieser das Gehäuse 4 abschließend aufnehmen kann. Wie in Fig. 1 dargestellt, kann ein Schließelement (beispielsweise in Form eines Rings) von außen das Gehäuse 4 radial nach innen gegen den Gehäusesitz 39 drücken.

Innerhalb des Expansionsventils 1 ist eine Vielzahl von Druckausgleichskanälen 25, 26 und 41 ausgebildet. So ist ein erster Druckausgleichskanal 25 angeordnet, der den Gehäuse-Innenraum 28 mit dem Fluideingangsraum 27 verbindet, um zwischen diesen beiden Räumen einen Druckausgleich herzustellen.

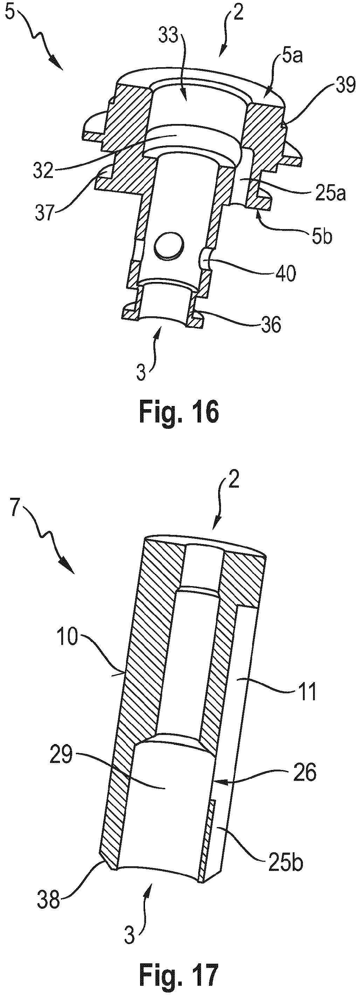

Dieser erste Druckausgleichskanal 25 weist einen ersten Kanalbereich 25a und einen zweiten Kanalbereich 25b auf. Der erste Kanalbereich 25a ist, wie in Fig. 14 und 16 dargestellt, innerhalb des Ventilbasiskörpers 5 ausgebildet. Insbesondere handelt es sich bei dem ersten Kanalbereich 25a um eine Bohrung von der dem Gehäuse 4 abgewandten Seite 5b in den Ventilbasiskörper 5 hinein. Der erste Kanalbereich 25a ist bis zu dem umlaufenden Freistich 32 des Ventilbasiskörpers 5 ausgebildet. Das heißt, dass sich die Bohrung bis zu diesem Freistich 32 erstreckt. Somit schafft der erste Kanalbereich 25a für sich eine Verbindung von der dem Gehäuse 4 abgewandten Seite 5b zu dem Aufnahmebereich 33 des Basiskörpers 5.

Im zusammengebauten Zustand des Expansionsventil 1 ist in diesem Aufnahmebereich 33 der in Fig. 17 dargestellte Hohlschaft 7 aufgenommen. Der Hohlschaft 7 weist den zweiten Kanalbereich 25b auf, der sich in Form der Längsnut 11 von einem unteren Ende hiervon nach oben erstreckt.

Besonders bevorzugt ist das untere Ende des Hohlschafts 7 als umlaufende Fase 38 ausgebildet, so dass sowohl die umlaufende Fase 38 als auch der umlaufende Freistich 32 als Verbindungsbereich zwischen dem ersten Kanalbereich 25a und dem zweiten Kanalbereich 25b dienen.

Allgemein hat ein umfänglich umlaufender Verbindungsbereich insbesondere den Vorteil, dass kein Ausrichten zwischen dem Hohlschaft 7 und dem Ventilbasiskörper 5 erfolgen muss. Prinzipiell würde es jedoch bereits ausreichen, wenn entweder der umlaufende Freistich 32 oder die umlaufende Fase 38 ausgebildet ist. Das Ausbilden beider Elemente führt allerdings zu einem schnelleren Druckausgleich.

Die Längsnut 11 des Hohlschafts 7 hat somit eine doppelte Funktion. Dabei dient sie einerseits dazu, den Gleitring 17 zu führen, und andererseits dazu, als zweiter Kanalbereich 25b einen Druckausgleich zu schaffen. Dies funktioniert insbesondere dadurch, dass die Längsnut 11 zu dem Gehäuseinnenraum 28 hin offen ist. Folglich ist ein Druckausgleich zwischen Fluideingangsraum 27 und Gehäuseinnenraum 28 gegeben.

Ein zweiter Druckausgleichskanal 26 sorgt für einen Druckausgleich zwischen Hohlschaft-Innenraum 29 und Gehäuse-Innenraum 28. Dieser zweite Druckausgleichskanal 26 ist besonders gut in Fig. 17 zu erkennen. In dieser Fig. ist insbesondere zu erkennen, dass der zweite Druckausgleichskanal 26 im Bereich einer maximalen radialen Ausdehnung der Längsnut 11 und des Hohlschaft-Innenraums 29 ausgebildet ist. Dies hat insbesondere den Vorteil, dass bei dem Einbringen der Längsnut 11 in den mit dem Hohlschaft-Innenraum 29 ausgebildeten Hohlschaft 7 auch gleichzeitig der zweite Druckausgleichskanal 26 erzeugt werden kann, ohne dass hierfür ein gesonderter Arbeitsschritt notwendig ist.

Im Prinzip ist der zweite Druckausgleichskanal 26 eine Öffnung am Boden der Längsnut 11. Diese Öffnung ist mit dem Hohlschaft-Innenraum 29 und der Längsnut 11 (und folglich auch mit dem Gehäuse-Innenraum 28 verbunden). Außerdem ist der zweite Druckausgleichskanal 26 bereichsweise von dem zweiten Kanalbereich 25b des ersten Druckausgleichskanals 25 ausgebildet, bzw. die Druckausgleichskanäle verwenden gemeinsame Bereiche.

Das Expansionsventil 1 weist ferner einen dritten Druckausgleichskanal 41 auf. Dieser dritte Druckausgleichskanal 41 ist besonders gut in Fig. 10 zu erkennen und verbindet den unteren Innenbereich 42 des Ventilbasiskörpers 35 mit dem Aufnahmebereich 21a des Hülsenelements 21. Der untere Innenbereich 42 des Ventilbasiskörpers 5 ist ferner über die Fluidbohrungen 40, wie in Fig. 1 zu erkennen, mit dem Fluideingangsraum 27 verbunden.

rerrDer Schutzbereich der vorliegenden Erfindung ist durch die Ansprüche gegeben und wird durch die in der Beschreibung erläuterten oder in den Figuren gezeigten Merkmale nicht beschränkt.

Insbesondere sind in der Beschreibung vielfache Einzelaspekte des Expansionsventils 1 beschrieben worden.

## Patentansprüche

1. Mit einem Schrittmotor betreibbares Expansionsventil (1), das Folgendes aufweist:
ein Gehäuse (4);
einen Hohlschaft (7), welcher in dem Gehäuse (4) angeordnet ist;
einen den Hohlschaft (7) tragenden Ventilbasiskörper (5), welcher das Gehäuse (4) abschließt;
einen Rotor (6), welcher mittels eines Stators antreibbar ist;
eine zentrale Spindel (8), welche innerhalb des Hohlschafts (7) angeordnet und von dem Rotor (6) derart antreibbar ist, dass eine Rotationsbewegung der Spindel (8) über eine Gewindeverbindung (9) in eine axiale Bewegung zum Öffnen und Schlie-ßen des Expansionsventils (1) überführbar ist; **gekennzeichnet durch**
einen einen Gewindegang (16) aufweisenden Spiralkörper (12), welcher um eine Mantelfläche (10) des Hohlschafts (7) herum angeordnet und mittels des Rotors (6) antreibbar ist,
wobei an dem Hohlschaft (7) ein Anschlagkörper angeordnet ist, der in dem Gewindegang (16) des Spiralkörpers (12) bewegbar angeordnet ist und als Teil einer Spindel-Stopper-Struktur eine obere Endlage und eine untere Endlage der zentralen Spindel (8) vorgibt.

2. Expansionsventil (1) nach Anspruch 1,
wobei der Hohlschaft (7) an der Mantelfläche (10) eine Längsnut (11) aufweist, und
wobei der Anschlagkörper als Gleitring (17) ausgebildet ist, der in dem Gewindegang (16) des Spiralkörpers (12) mittels der Längsnut (11) verdrehgesichert und in Axialrichtung bewegbar angeordnet ist.

3. Expansionsventil (1) nach Anspruch 2,
wobei die Spindel-Stopper-Struktur durch Zusammenwirken des Spiralkörpers (12) und des Gleitrings (17) ausgebildet ist.

4. Expansionsventil (1) nach einem der Ansprüche 2 bis 3,
wobei der Gleitring (17) einen sich radial nach innen erstreckenden Fortsatz (18) aufweist, der dazu ausgebildet ist, in der Längsnut (11) zu verlaufen und dort als Verdrehsicherung zu wirken.

5. Expansionsventil (1) nach einem der vorherigen Ansprüche,
wobei der Spiralkörper (12) ein erstes sich in Axialrichtung des Spiralkörpers (12) erstreckendes Anschlagelement (14) und ein zweites sich in Axialrichtung des Spiralkörpers (12) erstreckendes Anschlagelement (15) aufweist.

6. Expansionsventil (1) nach Anspruch 5,
wobei bei Kontakt des ersten Anschlagelements (14) mit dem Anschlagkörper die untere Endlage der Spindel (8) festgelegt ist, und
wobei bei Kontakt des zweiten Anschlagelements (15) mit dem Anschlagkörper zuzüglich des maximalen Verdrehwinkels des Spiralkörpers (12) die obere Endlage der Spindel (8) festgelegt ist.

7. Expansionsventil (1) nach einem der Ansprüche 2 bis 4, und 5 oder 6,
wobei der Gleitring (17) als zylindrische Spirale ausgebildet ist und ein oberes Ende (17a) und ein dem oberen Ende (17a) entgegengesetztes unteres Ende (17b) aufweist,
wobei das obere Ende (17a) mit dem ersten Anschlagelement (14) in Kontakt kommt, und
wobei das untere Ende (17b) mit dem zweiten Anschlagelement (15) in Kontakt kommt.

8. Expansionsventil (1) nach einem der Ansprüche 5 bis 7,
wobei der Spiralkörper (12) mittels des ersten Anschlagelements (14) mit einem Adapterelement (13) verbunden ist, um bei der Rotation des Rotors (6) mitgedreht zu werden, und
wobei das Adapterelement (13) den Rotor (6) mit der Spindel (8) verbindet, um die Spindel (8) bei der Rotation des Rotors (6) mitzudrehen.

9. Expansionsventil (1) nach einem der vorherigen Ansprüche,
wobei der Spiralkörper (12) eine Drehfeder ist, die in Form einer aus Stahl hergestellten Schraubenfeder ausgebildet ist.

10. Expansionsventil (1) nach einem der vorherigen Ansprüche,
wobei der Hohlschaft (7) aus einem Kunststoff, vorzugsweise aus Polyphenylensulfid, PPS, oder Polyetheretherketon, PEEK, oder aus Messing oder Bronze hergestellt ist.

11. Expansionsventil (1) nach einem der vorherigen Ansprüche,
wobei das Expansionsventil (1) ferner ein Hülsenelement (21) aufweist, das einen Aufnahmebereich (21a), in dem ein stempelartiger Endbereich (22) der zentralen Spindel (8), eine Druckfeder (24) und ein Kraftübertragungselement (23) vollständig aufgenommen sind, und eine Ventilnadel (20) aufweist,

12. Expansionsventil (1) nach Anspruch 11,
wobei das Kraftübertragungselement (23) so ausgebildet und angeordnet ist, dass es durch Kontakt mit der zentralen Spindel (8) Axialkräfte von der zentralen Spindel (8) über die Druckfeder (24) auf das Hülsenelement (21) überträgt,
wobei das Kraftübertragungselement (23) im Querschnitt betrachtet derart pilzförmig ausgebildet ist, dass Drehmomente nicht oder lediglich begrenzt von der zentralen Spindel (8) auf das Kraftübertragungselement (23) übertragen werden.

13. Expansionsventil (1) nach einem der vorherigen Ansprüche,
wobei das Gehäuse (4) und eine dem Gehäuse (4) zugewandte Seite (5a) des Ventilbasiskörpers (5) einen Gehäuse-Innenraum (28) begrenzen,
wobei innerhalb des Hohlschafts (7) ein Hohlschaft-Innenraum (29) ausgebildet ist,
wobei angrenzend an eine von dem Gehäuse (4) abgewandte Seite (5b) des Ventilbasiskörpers (1) in einem in einem Ventileinbauraum (43) eingebauten Zustand des Expansionsventils (1) ein Fluideingangsraum (27) angeordnet ist,
wobei ein erster Druckausgleichskanal (25) zum Druckausgleich zwischen dem Fluideingangsraum (27) und dem Gehäuse-Innenraum (28) angeordnet ist,
wobei der erste Druckausgleichskanal (25) einen ersten Kanalbereich (25a) und einen zweiten Kanalbereich (25b) aufweist
wobei der zweite Kanalbereich (25b) von der Längsnut 11 ausgebildet wird.

14. Expansionsventil (1) nach Anspruch 13,
wobei ein zweiter Druckausgleichskanal (26) zum Druckausgleich zwischen dem Hohlschaft-Innenraum (29) und dem Gehäuse-Innenraum (28) in einem Bereich einer maximalen radialen Ausdehnung der Längsnut (11) und des Hohlschaft-Innenraums (29) angeordnet ist.

## Claims

1. An expansion valve (1) operable by a stepper motor, comprising:
a housing (4);
a hollow shaft (7) which is arranged in the housing (4);
a valve base body (5) which supports the hollow shaft (7) and which closes the housing (4);
a rotor (6) which is configured to be driven by means of a stator;
a central spindle (8), which is arranged within the hollow shaft (7) and is configured to be driven by the rotor (6) in such a way that a rotational movement of the spindle (8) is convertible into an axial movement for opening and closing the expansion valve (1) via a threaded connection (9); **characterized by**
a spiral body (12) which comprises a thread (16), which is arranged around a lateral surface (10) of the hollow shaft (7) and which is configured to be driven by means of the rotor (6),
wherein a stop body is arranged on the hollow shaft (7), said stop body is arranged so as to be movable in the thread (16) of the spiral body (12) and, as part of a spindle-stopper structure, predefines an upper end position and a lower end position of the central spindle (8).

2. The expansion valve (1) according to claim 1, wherein the hollow shaft (7) comprises a longitudinal groove (11) on the lateral surface (10), and
wherein the stop body is configured as a sliding ring (17) which is arranged in the thread (16) of the spiral body (12) so as to be secured against rotation by means of the longitudinal groove (11) and so as to be movable in an axial direction.

3. The expansion valve (1) according to claim 2,
wherein the spindle-stopper structure is configured by interaction of the spiral body (12) and the sliding ring (17).

4. The expansion valve (1) according to one of claims 2 to 3,
wherein the sliding ring (17) comprises an extension (18) extending radially inwards, which is configured to extend in the longitudinal groove (11) and to act there as an anti-rotation means.

5. The expansion valve (1) according to one of the preceding claims,
wherein the spiral body (12) comprises a first stop element (14) extending in an axial direction of the spiral body (12) and a second stop element (15) extending in an axial direction of the spiral body (12).

6. The expansion valve (1) according to claim 5,
wherein, upon contact of the first stop element (14) with the stop body, the lower end position of the spindle (8) is fixed, and
wherein, upon contact of the second stop element (15) with the stop body plus the maximum angle of rotation of the spiral body (12), the upper end position of the spindle (8) is fixed.

7. The expansion valve (1) according to one of claims 2 to 4, and 5 or 6,
wherein the sliding ring (17) is configured as a cylindrical spiral and comprises an upper end (17a) and a lower end (17b) opposite the upper end (17a),
wherein the upper end (17a) comes into contact with the first stop element (14), and
wherein the lower end (17b) comes into contact with the second stop element (15).

8. The expansion valve (1) according to one of claims 5 to 7,
wherein the spiral body (12) is connected to an adapter element (13) by means of the first stop element (14) in order to be co-rotated upon rotation of the rotor (6), and
wherein the adapter element (13) connects the rotor (6) to the spindle (8) in order to co-rotate the spindle (8) upon rotation of the rotor (6).

9. The expansion valve (1) according to one of the preceding claims,
wherein the spiral body (12) is a torsion spring which is configured in the form of a helical spring made of steel.

10. The expansion valve (1) according to one of the preceding claims, wherein the hollow shaft (7) is made of a plastic, preferably of polyphenylene sulfide, PPS, or polyether ether ketone, PEEK, or of brass or bronze.

11. The expansion valve (1) according to one of the preceding claims,
wherein the expansion valve (1) further comprises a sleeve element (21) which comprises a receiving region (21a) in which a plunger-like end region (22) of the central spindle (8), a compression spring (24) and a force transmission element (23) are fully accommodated, and a valve needle (20),

12. The expansion valve (1) according to claim 11, wherein the force transmission element (23) is configured and arranged in such a way that, upon contact with the central spindle (8), said force transmission element transmits axial forces from the central spindle (8) via the compression spring (24) to the sleeve element (21),
wherein the force transmission element (23), when viewed in cross section, is mushroom-shaped in such a way that torques are not transmitted to the force transmission element (23) or are transmitted only to a limited extent from the central spindle (8).

13. The expansion valve (1) according to one of the preceding claims,
wherein the housing (4) and a side (5a) of the valve base body (5) facing the housing (4) delimit a housing interior (28),
wherein a hollow shaft interior (29) is configured within the hollow shaft (7),
wherein a fluid inlet chamber (27) is arranged adjacent to a side (5b) of the valve base body (1) facing away from the housing (4) when the expansion valve (1) is installed in a valve installation chamber (43),
wherein a first pressure equalization channel (25) for pressure equalization is arranged between the fluid inlet chamber (27) and the housing interior (28),
wherein the first pressure equalization channel (25) comprises a first channel region (25a) and a second channel region (25b),
wherein the second channel region (25b) is formed by the longitudinal groove 11.

14. The expansion valve (1) according to claim 13,
wherein a second pressure equalization channel (26) for pressure equalization is arranged between the hollow shaft interior (29) and the housing interior (28) in a region of a maximum radial extent of the longitudinal groove (11) and of the hollow shaft interior (29).

## Revendications

1. Soupape de détente (1) configurée de manière à pouvoir être actionnée par un moteur pas à pas, comprenant :
un boîtier (4) ;
une tige creuse (7) disposée dans le boîtier (4) ;
un corps de base de soupape (5) portant la tige creuse (7) et fermant le boîtier (4) ;
un rotor (6) configuré de manière à pouvoir être entraîné au moyen d'un stator ;
une broche centrale (8), qui est disposée à l'intérieur de la tige creuse (7) et qui est configurée de manière à pouvoir être entraînée par le rotor (6) de telle sorte qu'un mouvement de rotation de la broche (8) soit convertissable par le biais d'une connexion filetée (9) en un mouvement axial pour ouvrir et fermer la soupape de détente (1) ;
**caractérisée par**
un corps en spirale (12) présentant un pas de vis (16), qui est disposé autour d'une surface enveloppante (10) de la tige creuse (7) et qui est configuré de manière à pouvoir être entraîné au moyen du rotor (6),
dans laquelle un corps de butée est disposé au niveau de la tige creuse (7), ledit corps de butée est disposé de manière à pouvoir être déplacé dans le pas de vis (16) du corps en spirale (12) et définit, en tant que partie d'une structure de butée de broche, une position d'extrémité supérieure et une position d'extrémité inférieure de la broche centrale (8).

2. Soupape de détente (1) selon la revendication 1, dans laquelle la tige creuse (7) présente une rainure longitudinale (11) au niveau de la surface enveloppante (10), et
dans laquelle le corps de butée est réalisé sous la forme d'une bague de glissement (17), qui est disposée dans le pas de vis (16) du corps en spirale (12) de manière à être bloquée en rotation au moyen de la rainure longitudinale (11) et à pouvoir être déplacée dans une direction axiale.

3. Soupape de détente (1) selon la revendication 2,
dans laquelle la structure de butée de broche est réalisée par coopération du corps en spirale (12) et de la bague de glissement (17).

4. Soupape de détente (1) selon l'une des revendications 2 à 3,
dans laquelle la bague de glissement (17) présente un prolongement (18) s'étendant radialement vers l'intérieur, qui est réalisé de manière à s'étendre dans la rainure longitudinale (11) et à y agir en tant que dispositif anti-rotation.

5. Soupape de détente (1) selon l'une des revendications précédentes,
dans laquelle le corps en spirale (12) présente un premier élément de butée (14) s'étendant dans la direction axiale du corps en spirale (12) et un deuxième élément de butée (15) s'étendant dans la direction axiale du corps en spirale (12).

6. Soupape de détente (1) selon la revendication 5,
dans laquelle la position d'extrémité inférieure de la broche (8) est fixée lors du contact du premier élément de butée (14) avec le corps de butée, et
dans laquelle la position d'extrémité supérieure de la broche (8) est fixée lors du contact du deuxième élément de butée (15) avec le corps de butée plus l'angle de rotation maximal du corps en spirale (12).

7. Soupape de détente (1) selon l'une des revendications 2 à 4, et 5 ou 6,
dans laquelle la bague de glissement (17) est réalisée sous la forme d'une spirale cylindrique et présente une extrémité supérieure (17a) et une extrémité inférieure (17b) opposée à l'extrémité supérieure (17a),
dans laquelle l'extrémité supérieure (17a) vient en contact avec le premier élément de butée (14), et
dans laquelle l'extrémité inférieure (17b) vient en contact avec le deuxième élément de butée (15).

8. Soupape de détente (1) selon l'une des revendications 5 à 7,
dans laquelle le corps en spirale (12) est relié à un élément adaptateur (13) au moyen du premier élément de butée (14) afin d'être entraîné en rotation lors de la rotation du rotor (6), et
dans laquelle l'élément adaptateur (13) relie le rotor (6) à la broche (8) afin d'entraîner en rotation la broche (8) lors de la rotation du rotor (6).

9. Soupape de détente (1) selon l'une des revendications précédentes,
dans laquelle le corps en spirale (12) est un ressort de torsion, qui est réalisé sous la forme d'un ressort hélicoïdal en acier.

10. Soupape de détente (1) selon l'une des revendications précédentes,
dans laquelle la tige creuse (7) est réalisée en une matière plastique, de préférence en polysulfure de phénylène, PPS, ou en polyétheréthercétone, PEEK, ou en laiton ou en bronze.

11. Soupape de détente (1) selon l'une des revendications précédentes,
dans laquelle la soupape de détente (1) comprend en outre un élément de manchon (21) qui présente une zone de réception (21a),
dans laquelle une zone d'extrémité en forme de poinçon (22) de la broche centrale (8), un ressort de compression (24) et un élément de transmission de force (23) sont entièrement logés, ainsi qu'une aiguille de soupape (20).

12. Soupape de détente (1) selon la revendication 11, dans laquelle l'élément de transmission de force (23) est réalisé et disposé de telle sorte qu'il transmette, par contact avec la broche centrale (8), des forces axiales de la broche centrale (8) à l'élément de manchon (21) par le biais du ressort de compression (24),
dans laquelle l'élément de transmission de force (23), observé en coupe transversale, est réalisé en forme de champignon de telle sorte que des couples ne soient pas transmis ou seulement de manière limitée de la broche centrale (8) à l'élément de transmission de force (23).

13. Soupape de détente (1) selon l'une des revendications précédentes,
dans laquelle le boîtier (4) et un côté (5a) du corps de base de soupape (5) tourné vers le boîtier (4) délimitent un espace intérieur de boîtier (28),
dans laquelle un espace intérieur de tige creuse (29) est réalisé à l'intérieur de la tige creuse (7),
dans laquelle une chambre d'entrée de fluide (27) est disposée de manière adjacente à un côté (5b) du corps de base de soupape (1) opposé au boîtier (4) lorsque la soupape de détente (1) est installée dans un espace de montage de soupape (43),
dans laquelle un premier canal d'équilibrage de pression (25) pour l'équilibrage de pression est disposé entre la chambre d'entrée de fluide (27) et l'espace intérieur de boîtier (28),
dans laquelle le premier canal d'équilibrage de pression (25) présente une première région de canal (25a) et une deuxième région de canal (25b),
dans laquelle la deuxième région de canal (25b) est réalisée par la rainure longitudinale 11.

14. Soupape de détente (1) selon la revendication 13,
dans laquelle un deuxième canal d'équilibrage de pression (26) pour l'équilibrage de pression est disposé entre l'espace intérieur de tige creuse (29) et l'espace intérieur de boîtier (28) dans une région d'une extension radiale maximale de la rainure longitudinale (11) et de l'espace intérieur de tige creuse (29).
